# EUROPÄISCHE PATENTANMELDUNG

(11) **EP 2 463 357 A1**
(43) Veröffentlichungstag der Anmeldung: **13.06.2012**
(21) Anmeldenummer: 11008127.0
(22) Anmeldetag: 07.10.2011
(51) Int. Cl.: C10L 5/44, C10L 5/36, C10L 5/32, C10L 5/24

(54) **Braunkohlenkoksbrikett mit Staubbindemittel**

(30) Priorität: 07.12.2010 DE 102010053618
(71) Anmelder: Rheinbraun Brennstoff GmbH, 50935 Köln (DE)
(72) Erfinder: Stormanns, Frank, 47849 Wassenberg (DE); Vossenberg, Klaus, 52388 Nörvenich (DE)
(74) Vertreter: Polypatent

(57) **Zusammenfassung**

Die Erfindung betrifft ein Verfahren zur Herstellung nicht-staubender oder vermindert-staubender Briketts, insbesondere Braunkohlenkoksbriketts, welche auf offener Glut als stückige Agglomerate umfassend feinkörnigen bis feinstkörnigen Braunkohlenkoks abgebrannt werden können. Die Erfindung betrifft auch staubarme Braunkohlenkoksbriketts, insbesondere solche, die mit dem erfindungsgemäßen Verfahren hergestellt werden können. Darüber hinaus betrifft die Erfindung die Verwendung bestimmter Mittel als Staubbindemittel für solche Briketts.

## Beschreibung

Die Erfindung betrifft ein Verfahren zur Herstellung nicht-staubender oder vermindert-staubender Briketts, insbesondere Braunkohlenkoksbriketts, welche auf offener Glut als stückige Agglomerate umfassend feinkörnigen bis feinstkörnigen Braunkohlenkoks abgebrannt werden können. Die Erfindung betrifft auch staubarme Braunkohlenkoksbriketts, insbesondere solche, die mit dem erfindungsgemäßen Verfahren hergestellt werden können. Darüber hinaus betrifft die Erfindung die Verwendung bestimmter Mittel als Staubbindemittel für solche Briketts.

Braunkohlenkoksbriketts können zum Beispiel in geeigneter Form und Ausführung als Grillbriketts zur Zubereitung von Speisen auf offener Glut Verwendung finden.

Staubbildung bei Kohle oder Koks in pulveriger, granularer oder brikettartiger Form ist eine übliche Erscheinung, die je nach Kohle- oder Koksart und je nach deren Anwendungszweck problematisch ist oder zumindest erhebliche Nachteile aufweist. Zur Lösung dieses allgemeinen Problems sind unterschiedlichste Maßnahmen vorgenommen worden, die sich von Fall zu Fall und zum Teil stark unterscheiden. In der Regel sind die Maßnahmen auf einen Anwendungsfall zugeschnitten, wobei neben der Staubvermeidung oft weitere Aspekte eine - manchmal auch führende - Rolle spielen.

So ist bekannt, dass Steinkohlenbriketts mit einer NaNO₃-Lösung besprüht werden können, um die Staubwirkung zu reduzieren und gleichzeitig das Brikett mit einem Brandbeschleuniger zu versehen.

Es ist auch bekannt, dass bei Bitumen-gebundenen Steinkohlenbriketts (sogenannte Nussbriketts), die draußen gelagert werden, mit CaCl₂-Lösung besprüht werden, um das Stauben zu minimieren. Calciumchlorid ist hygroskopisch und hält auf diese Weise das Nussbrikett feucht. Das Feuchtwerden wirkt sich naturgemäß nachteilig auf das Abbrandverhalten der Briketts aus.

Eine Staubbindung wird auch bei in Silberfarbe getauchten Steinkohlebriketts (Eierbriketts der Sorte "Extrazit") erzielt. Diese Briketts enthalten Melasse als Bindemittel.

Bezüglich der genannten Steinkohlenbriketts ist festzuhalten, dass sich diese nicht als Grillbriketts und insbesondere nicht zur Zubereitung von Speisen eignen.

Prinzipiell bekannt sind auch Staubbindemittel auf Basis organischer Polymere, die z.B. als Dispersion auf verschiedene staubende Materialien aufgesprüht oder aufgenebelt werden können. So ist zum Beispiel "Inhidust F2" der Firma Govi als Staubbinder für verschiedene trockene Pulver entwickelt worden. Als trockene Pulver werden auf dem technischen Datenblatt von Inhidust F2 Kohle, Zement, Gips, Perlitkörner, Erz, Mineralstoffe und Holzstaub genannt. Über die Wirksamkeit von Inhidust F2 bei stückigen Materialien, insbesondere bei Kohlenkoksbriketts ist nichts bekannt.

Aus der EP 03 856 65 A2 ist beispielsweise ein Brikett zum Abbrand in einem offenen Feuer beschrieben, welches aus einer Mischung aus Feinkohlen verschiedenster Inkohlungsgrade und diversen Zusätzen wie beispielsweise Eisenoxid oder Magnesiumsulfat zur Verbesserung der Brenneigenschaften sowie einem organischen Bindemittel wie beispielsweise Melasse, Bitumen oder Stärke besteht. Dabei soll das Bindemittel einen möglichst raucharmen Abbrand gewährleisten. Ein solches Brikett eignet sich insbesondere wegen des vergleichsweise hohen Anteils an flüchtigen Bestandteilen nicht als Brennmaterial für die Zubereitung von Speisen.

Ein Braunkohlenkoksbrikett der eingangs genannten Art sowie ein Verfahren zu dessen Herstellung sind beispielsweise als Grillbrikett aus der DE 199 61 325 C2 bekannt. Dieses Grillbrikett soll herkömmliche Grillbriketts aus Holzkohlenstaub und einem organischen Bindemittel substituieren, da die Herstellung von Holzkohle verhältnismäßig aufwändig und teuer ist. Darüber hinaus ist die Herstellung von Holzkohle wegen des damit verbundenen Hartholzverbrauchs unter Umweltschutzgesichtspunkten nicht unbedingt wünschenswert.

Nicht-staubende oder staubarme Braunkohlenkoksbriketts oder Grillbriketts umfassend oder bestehend aus Braunkohlenkoks sind derzeit nicht bekannt.

Der Erfindung liegt daher die Aufgabe zugrunde, ein staubarmes Brikett, insbesondere auf Basis von feinkörnigem bis feinstkörnigem Braunkohlenkoks, herzustellen. Die Herstellung soll darüber hinaus kostengünstig und verfahrenstechnisch leicht umsetzbar sein.

Diese Aufgabe wird erfindungsgemäß gelöst durch ein Verfahren zur Herstellung eines staubarmen Braunkohlenkoksbriketts, in einer besonderen Ausführungsform zum Beispiel zur Herstellung eines staubarmen Grillbriketts, umfassend folgende Verfahrensschritte:
- Bereitstellen von feinkörnigem bis feinstkörnigem Braunkohlenkoks oder einer Mischung enthaltend solchen Braunkohlenkoks,
- Stückigmachen durch Pressagglomeration in Form von Briketts des feinkörnigen bis feinstkörnigen Braunkohlenkokses oder der Mischung,
- gegebenenfalls Trocknen der Pressformlinge,
- Bereitstellen oder Herstellen eines flüssigen Staubbindemittels oder einer flüssigen Zubereitung enthaltend ein Staubbindemittel,
- Aufbringen der flüssigen Zubereitung auf die Pressformlinge, und
- gegebenenfalls Trocknen der Pressformlinge.

Mit "Braunkohlenkoksbrikett" ist hier ein Brikett gemeint, welches überwiegend, also zu mindestens 50 Gew.-%, bevorzugt mindestens 70 Gew.-%, und besonders bevorzugt mindestens 80 Gew.-%, aus Braunkohlenkoks besteht.

Mit "feinkörnigem Braunkohlenkoks" ("Feinkoks") ist Braunkohlenkoks mit einer Korngröße im Bereich von über 1,5 bis 5 mm gemeint. Mit "feinstkörnigem Braunkohlenkoks" ("Feinstkoks") ist Braunkohlenkoks mit einer Korngröße im Bereich von über 0 bis 1,5 mm gemeint.

Zur Brikettierung, also dem Stückigmachen durch Pressagglomeration, kann ausschließlich Feinstkoks verwendet werden oder aber Mischungen aus Feinstkoks und Feinkoks im Verhältnis von bis zu 1:1, bevorzugt im Verhältnis im Bereich von 6:1 bis 2:1, besonders bevorzugt im Verhältnis 5:1 bis 3:1.

Mit "Briketts" im Rahmen der vorliegenden Erfindung sind alle Arten von stückigen Agglomeraten gemeint, z.B. Pressagglomerate ("Pressformlinge"). Darunter fallen zum Beispiel Eierbriketts.

Das Trocknen nach der Pressagglomeration erfolgt üblicherweise durch Wärmezufuhr auf einem Bandtrockner mit einer Luftströmung von ca. 150 bis 200°C. Die Verweildauer auf dem Band beträgt ca 30 bis 60 Minuten.

Das Trocknen nach dem Aufbringen der flüssigen Zubereitung auf die Pressformlinge erfolgt dann üblicherweise durch die aufgrund der vorherigen Trocknung vorhandene Restwärme der Briketts.

Mit "flüssigem Staubbindemittel oder einer flüssigen Zubereitung enthaltend ein Staubbindemittel" ist gemeint, dass i) das Staubbindemittel selbst flüssig sein kann oder dass ii) das Staubbindemittel selbst fest oder flüssig sein kann und in Lösung, als Dispersion oder Emulsion vorliegt. Das Staubbindemittel kann dabei wasserlöslich sein und als wässrige Lösung vorliegen oder es kann flüssig und hydrophob (oder hydrophil) sein und als W/O-Emulsion (oder ONV-Emulsion) vorliegen. Das Staubbindemittel kann aber auch, z.B. bei Raumtemperatur, fest sein und als Dispersion in Wasser oder einem anderen Lösungsmittel vorliegen. In jedem Fall ist es vorteilhaft, wenn das Staubbindemittel oder die Zubereitung derart "flüssig" ist, dass es durch Sprühen mit entsprechenden Vorrichtungen aufgetragen werden kann.

Im Rahmen der Erfindung geeignete flüssige Staubbindemittel oder flüssige Zubereitungen enthaltend ein Staubbindemittel sind solche, die ein organisches Bindemittel auf Polymerbasis umfassen, die auf CaCl₂ basieren, die auf Fetten oder Wachsen basieren und solche auf Lignin-Basis. Beim CaCl₂-basierten Staubbindemittel findet eine Bindung von Feuchtigkeit durch die hydrohile Eigenschaft des Calciumchlorids statt. Bei den organischen Bindemitteln auf Polymerbasis, z.B. Aldepol VAV 25 (Fa. Imparat, enthaltend Vinylacetat-Copolymer), und Inhidust F2 (Fa. Govi, Lignin-Basis) findet eine Vernetzung auf der Brikettoberfläche statt. Bei den Staubbindemitteln, die auf Fetten oder Wachsen basieren, z.B. Garo 217 (Fa. Govi), findet eine Art "Verklebung" auf der Brikettoberfläche statt.

Als flüssige Staubbindemittel oder als flüssige Zubereitungen enthaltend ein Staubbindemittel kommen besonders bevorzugt solche in Betracht, die ein organisches Bindemittel auf Polymerbasis umfassen.

Mit "flüssigem Staubbindemittel, das ein organisches Bindemittel auf Polymerbasis umfasst" ist somit gemeint, dass das flüssige Staubbindemittel aus einem flüssigen organischen Bindemittel auf Polymerbasis bestehen kann oder dass das flüssige Staubbindemittel ein flüssiges organisches Bindemittel auf Polymerbasis sowie weitere Hilfs- und/oder Zusatzstoffe umfassen kann. Mit "flüssige Zubereitung enthaltend ein Staubbindemittel, die ein organisches Bindemittel auf Polymerbasis umfasst " ist hingegen gemeint, dass ein organisches Bindemittel auf Polymerbasis als Staubbindemittel vorgesehen sein kann, wobei das Polymer selbst flüssig oder fest sein kann, solange die Zubereitung flüssig ist. Die Zubereitung muss dann gegebenenfalls ein Lösungsmittel oder andere flüssige Hilfs-und/oder Zusatzstoffe enthalten, die die Zubereitung insgesamt flüssig machen.

Wie sich schon aus oben Gesagtem ergibt, kann das flüssige Staubbindemittel oder die flüssige Zubereitung enthaltend das Staubbindemittel wässrig sein oder ein anderes Lösungsmittel enthalten.

Die Erfindung umfasst auch Braunkohlenkoksbriketts, welche als hygienisch unbedenkliches staubarmes Grillbrikett verwendet werden können. Soll das hergestellte Brikett ein Grillbrikett sein oder zur Zubereitung von Speisen verwendet werden können, so muss das Staubbindemittel lebensmittelrechtlich unbedenklich sein.

Besonders bevorzugte flüssige Staubbindemittel oder flüssige Zubereitungen enthaltend ein Staubbindemittel sind ausgewählt aus der Gruppe umfassend Garo 217 (Fa. Govi), Aldepol VAV 25 (Fa. Imparat), und Inhidust F2 (Fa. Govi). Diese sind bevorzugt, da sie eine sehr gute Staubbindefunktion aufweisen. Inhidust F2, ein Mittel auf Lignin-Basis, ist mit hoher Wahrscheinlichkeit beim Abbrand auf z.B. einem Grill lebensmittelrechtlich unbedenklich und kann somit bevorzugt für als Grillbriketts genutzte erfindungsgemäße Briketts verwendet werden.

Das Aufbringen des flüssigen Staubbindemittels oder der flüssigen Zubereitung enthaltend das Staubbindemittel kann grundsätzlich durch Tauchen in ein Bad, durch Aufsprühen oder durch Pinseln im weitesten Sinne erfolgen. Im Falle von hygroskopischen Briketts mit hygroskopischen Eigenschaften, z.B. durch Verwendung von wasserlöslichen Bindemitteln in den Briketts, kann das Tauchen nachteilig sein. Auch das Auftragen durch Aufpinseln ist im industriellen Maßstab unpraktikabel.

Besonders bevorzugt ist, wenn das flüssige Staubbindemittel oder die flüssige Zubereitung enthaltend das Staubbindemittel auf die gegebenenfalls getrockneten Pressformlinge durch Sprühen aufgebracht wird. Ein derartiger Auftrag hat insbesondere produktionstechnische und kostenmäßige Vorteile, da der Sprühauftrag gegebenenfalls gemeinsam mit weiteren Hilfsstoffen wie zum Beispiel Duftstoffen und/oder Zündhilfen vorgenommen werden kann.

In einer bevorzugten Variante des erfindungsgemäßen Verfahrens wird das flüssige Staubbindemittel oder die flüssige Zubereitung enthaltend das Staubbindemittel daher durch Sprühen aufgebracht.

Das Aufsprühen des flüssigen Staubbindemittels oder der flüssigen Zubereitung enthaltend das Staubbindemittel auf die getrockneten Pressformlinge kann durch verschiedene Verfahren erfolgen:
- durch individuelles Besprühen jedes einzelnen Pressformlings;
- durch kontinuierliches Vorbeiführen der Pressformlinge mittels Förderer, z.B. Gliederband, Wabenband, Netz- oder Gewebeband, an einer Sprühvorrichtung;
- durch chargenweises Besprühen der Pressformlinge in einer Trommel, z.B. des Typs Rowamat der Firma Walther Trowal GmbH & Co. KG;
- durch kontinuierliches Besprühen der Pressformlinge in einer Trommel im Durchlaufverfahren.

Gegenstand der vorliegenden Erfindung ist auch ein staubarmes Braunkohlenkoksbrikett, in einer besonderen Ausführungsform zum Beispiel ein staubarmes Grillbrikett, umfassend feinkörnigen bis feinstkörnigen Braunkohlenkoks, dadurch gekennzeichnet, dass ein Staubbindemittel oder eine Zubereitung enthaltend das Staubbindemittel auf der Oberfläche des Briketts aufgebracht ist.

Als Staubbindemittel oder als Zubereitungen enthaltend ein Staubbindemittel kommen besonders bevorzugt solche in Betracht, die ein organisches Bindemittel auf Polymerbasis umfassen. Mit "Staubbindemittel, das ein organisches Bindemittel auf Polymerbasis umfasst" ist somit gemeint, dass das Staubbindemittel aus einem organischen Bindemittel auf Polymerbasis bestehen kann oder dass das Staubbindemittel ein organisches Bindemittel auf Polymerbasis inklusive weitere Hilfs- und/oder Zusatzstoffe ist. Mit "Zubereitung enthaltend ein Staubbindemittel, die ein organisches Bindemittel auf Polymerbasis umfasst " ist hingegen gemeint, dass ein organisches Bindemittel auf Polymerbasis als Staubbindemittel vorgesehen sein kann. Die Zubereitung kann dann gegebenenfalls darüber hinaus Hilfs-und/oder Zusatzstoffe enthalten.

Geeignete organische Bindemittel auf Polymerbasis sind solche, die bereits weiter oben bei der Beschreibung des Verfahrens genannt wurden.

Besonders bevorzugte Staubbindemittel oder Zubereitungen enthaltend ein Staubbindemittel sind ausgewählt aus der Gruppe umfassend Garo 217 (Fa. Govi), Aldepol VAV 25 (Fa. Imparat), und Inhidust F2 (Fa. Govi). Diese Mittel liegen in der Regel zunächst in flüssiger Form vor und werden auf die Briketts aufgebracht, z.B. durch Aufsprühen. Anschließend trocknen die Briketts oder werden getrocknet. Die genannten Mittel bzw. Zubereitungen sind bevorzugt, da sie einerseits beim Abbrand auf z.B. einem Grill lebensmittelrechtlich unbedenklich sind und andererseits eine sehr gute Staubbindefunktion aufweisen.

Der Anteil des auf der Oberfläche aufgetragenen Staubbindemittels oder der Zubereitung enthaltend das Staubbindemittel am Brikett kann 0,01 bis 3 Gew.-%, bevorzugt 0,1 bis 2 Gew.-%, besonders bevorzugt 0,2 bis 1,5 Gew.-%, und ganz besonders bevorzugt 0,5 bis 1 Gew.-% betragen.

Als Brandmaterial für die erfindungsgemäßen Briketts bzw. deren Herstellung kommt im Rahmen der vorliegenden Erfindung Braunkohlenkoks in Betracht. Braunkohle oder Steinkohle sind aufgrund ihrer Zusammensetzung aus lebensmittelrechtlichen Gründen nicht zur Verwendung in Grillbriketts zur Zubereitung von Speisen auf offener Glut geeignet.

Eine Variante des Braunkohlenkoksbriketts gemäß der Erfindung zeichnet sich dadurch aus, dass das Brikett ein organisches Bindemittel, vorzugsweise in Form von Stärke oder auf der Basis von Stärke, umfasst. Die Stärke kann dabei in Form von Mais-, Weizen- oder Kartoffelstärke vorgesehen sein. Als Stärke kann beispielsweise native Stärke Anwendung finden, welche mit Wasser gemischt erhitzt und anschließend mit Braunkohlenkoks gemischt wird. Alternativ hierzu kann kaltquellende Stärke Anwendung finden, welche nach Zugabe von Wasser mit Braunkohlenkoks gemischt wird. Schließlich kann native Stärke Anwendung finden, welche nach Zugabe von trockenem Natriumhydroxid mit Wasser gemischt wird oder welche mit Natriumhydroxid in wässriger Lösung gemischt wird. Das Natriumhydroxid dient als Verkleisterungshilfe (Katalysator). Durch Beimischung von Natriumhydroxid kann ohne zusätzliche Erwärmung eine Verkleisterung erfolgen. Anstelle von Natriumhydroxid kann auch Kaliumhydroxid Anwendung finden. Dieses ist in der EU als Lebensmittelzusatzstoff mit der Bezeichnung E 525 ohne Höchstmengenbeschränkung für Lebensmittel allgemein zugelassen.

Wahlweise kann das Braunkohlenkoksbrikett Duftadditive und/oder einen Zusatz eines Sauerstoff freisetzenden Oxidationsmittels und/oder farbgebende Pigmente und/oder andere Hilfsstoffe umfassen.

Dabei können die Duftadditive und/oder der Zusatz eines Sauerstoff freisetzenden Oxidationsmittels und/oder die farbgebende Pigmente und/oder die anderen Hilfsstoffe jeweils unabhängig voneinander homogen in dem Agglomerat verteilt sein oder, gegebenenfalls gemeinsam mit dem farbgebenden Pigment, auf der Oberfläche des Agglomerats, vorzugsweise durch Sprühen, aufgetragen sein.

Das Braunkohlenkoksbrikett nach der Erfindung weist bevorzugt eine Zusammensetzung von 80-90 Gew.-% Braunkohlenkoks, 5-10 Gew.-% des Bindemittels und gegebenenfalls 0,3-3 Gew.-% eines auf der Oberfläche aufgetragenen Zusatzes eines Sauerstoff freisetzenden Oxidationsmittels auf. Neben den 0,01 bis 3 Gew.-% des auf der Oberfläche aufgetragenen Staubbindemittels können gegebenenfalls auch noch 0,0005 bis 2 Gew.-% farbgebende Pigmente und/oder Duftadditive und/oder andere Hilfsstoffe in den Braunkohlenkoksbriketts eingearbeitet bzw. auf die Oberfläche der Briketts aufgetragen sein. Eine besonders bevorzugte Variante des Braunkohlenkoksbriketts gemäß der Erfindung umfasst mehr als 85 % Braunkohlenkoks, vorzugsweise Braunkohlenfeinstkoks (Durchschnittliche Korngröße ≤ 1 mm), 5 bis 10 Gew.-% eines warm- oder kaltquellenden Bindemittels wie beispielsweise Mais-, Weizen- oder Kartoffelstärke und gegebenenfalls 0,3-3 Gew.-% des auf der Oberfläche aufgetragenen Zusatzes eines Sauerstoff freisetzenden Oxidationsmittels. Auch hier können neben den 0,001 bis 3 Gew.-% des auf der Oberfläche aufgetragenen Staubbindemittels gegebenenfalls noch zusätzlich 0,0005 bis 2 Gew.-% auf der Oberfläche aufgetragenes farbgebendes Pigment und/oder Duftadditive und/oder andere Hilfsstoffe enthalten oder aufgetragen sein.

Der Braunkohlenfeinstkoks kann mit feinstkörniger Holzkohle zumindest teilweise substituiert werden. Der Anteil sollte so begrenzt sein, dass es sich noch um ein Braunkohlenkoksbrikett handelt. Dadurch lässt sich das Anzünd- und Durchglühverhalten von Braunkohlenkoksbriketts verbessern. Naturgemäß hat ein solches Braunkohlenkoksbrikett trotzdem noch ein trägeres Anzünd- und Durchglühverhalten als ein reines Holzkohlenbrikett, so dass die Zugabe eines Zusatzes eines Sauerstoff freisetzenden Oxidationsmittels empfehlenswert sein kann. Was hier für Braunkohlenfeinstkoks ausgesagt wird gilt auch allgemein für Braunkohlenkoksbrikett auf Basis von normalem Braunkohlenkoks.

Die hier beschriebenen erfindungsgemäßen Briketts können nach dem zuvor beschriebenen Verfahren hergestellt werden. Vorzugsweise werden sie nach diesem Verfahren hergestellt.

Gegenstand der vorliegenden Erfindung ist auch die Verwendung eines flüssigen Staubbindemittels oder einer flüssigen Zubereitung enthaltend ein Staubbindemittel zur Herstellung eines staubarmen Braunkohlenkoksbriketts, vorzugsweise eines staubarmen Grillbriketts. Bevorzugte Ausgestaltungen der erfindungsgemäßen Verwendung ergeben sich aus obigen Beschreibungen zum Staubbindemittel.

Eine besonders bevorzugte Ausführungsform des erfindungsgemäßen Verfahrens wird nachstehend anhand eines in den Zeichnungen dargestellten Ausführungsbeispiels erläutert.

Es zeigen:
- Figur 1: eine Seitenansicht der Durchlauf-Sprüheinrichtung gemäß der Erfindung,

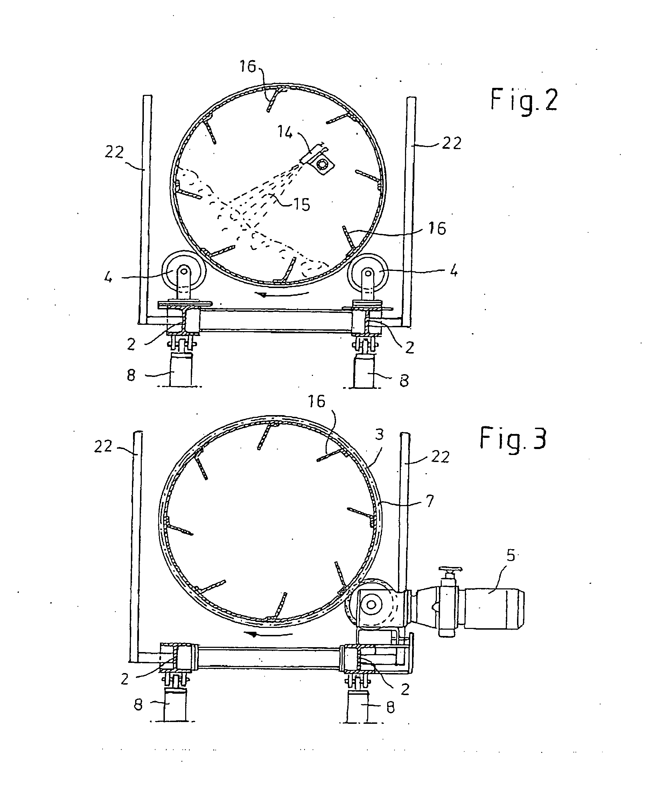

- Figur 2: eine Schnittansicht entlang der Linien II-II in Figur 1, und
- Figur 3: eine Schnittansicht entlang der Linien III-III in Figur 1.

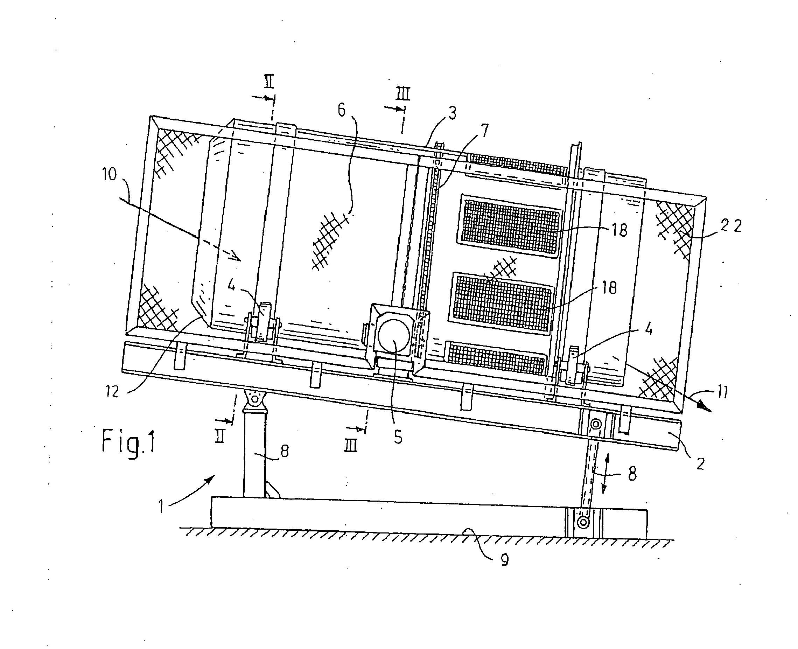

Es wird zunächst Bezug genommen auf Figur 1. Die mit 1 bezeichnete Durchlauf-Sprüheinrichtung gemäß der Erfindung umfasst einen Grundrahmen 2, auf dem eine Sprühtrommel 3 drehbar gelagert ist. Die Sprühtrommel 3 ist auf dem Grundrahmen 2 über insgesamt vier nicht angetriebenen Laufrollen 4 drehbar abgestützt. Der Antrieb der Sprühtrommel 3 erfolgt über einen Elektromotor 5, der ebenfalls auf dem Grundrahmen 2 angeordnet ist. Der Elektromotor 5 ist als mechanisch verstellbarer Getriebemotor ausgebildet, der über ein Triebstockritzel mit einer über den Trommelmantel 6 gespannten Rollenkette 7 in Eingriff steht.

Der Grundrahmen 2 ist über Füße 8 mit einer Bodenplatte 9 gegen die Aufstellebene abgestützt.

Wie vorstehend bereits erwähnt, ist der Trommelmantel 6 zylindrisch und besitzt eine mit 10 bezeichneten stirnseitigen Einlauf sowie einen mit 11 bezeichneten gegenüberliegenden stirnseitigen Auslauf. Beide Stirnseiten der Sprühtrommel 3 sind im Wesentlichen offen.

Über einen oder beide Füße 8 ist der Grundrahmen 2 in seiner Neigung zwischen 0° und etwa 10° verstellbar, und zwar auch während des Betriebs der Durchlauf-Sprüheinrichtung. Hierzu sind einer oder beide Füße 8 über Spannspindeln mit Trapezgewinde in der Höhe verstellbar.

Der Einlauf 11 wird über eine nicht dargestellte Aufgaberutsche, die vorzugsweise als halbschalige Rutsche ausgebildet ist und unter einem Rutschenwinkel von etwa 30° bis 35° im unteren Bereich des Einlaufs 11 mittig angeordnet ist, mit Material beschickt. Unterhalb des Auslaufs 11 ist beispielsweise ein Förderband angeordnet, auf das das Material abgeworfen werden kann. Der einlaufseitige Rand 12 der Sprühtrommel 6 ist stromaufwärts des Materialstroms konisch verjüngt, um bei Rückstau der Braunkohlenkoksbriketts ein Herauslaufen der Briketts auf der betreffenden Seite zu verhindern.

### Beispiele

Die Testvorrichtung besteht aus einer Blechtrommel mit einem Durchmesser von 800 mm und einer Tiefe von 350 mm. Die Rückseite der Trommel besteht aus Blech und ist geschlossen. Die Vorderseite ist offen. In der Trommel sind 8 Mitnehmerbleche angebracht, die das zu trommelnde Material beim Drehen mitnehmen und anheben. Für jeden Versuch werden 9 kg Testbriketts in die Trommel gefüllt. Dann wird die offene Vorderseite mit einer 0,2 mm starken, transparenten PE - Folie bespannt und verschlossen. Die Trommel wird dann auf ein Rollenuntergestell gesetzt auf dem sie gedreht werden kann. Innen, mittig auf der Rückseite der Trommel befindet sich eine Markierung in Form eines Kreuzes und einem Durchmesser von ca. 10 cm in gelber Farbe. Die Trommel wird in eine Drehbewegung von 20 U/min versetzt, wodurch die Briketts im Inneren umgewälzt werden. Dabei findet eine Staubentwicklung statt die bei anhaltender Drehbewegung den Innenraum der Trommel mehr und mehr verdunkelt. Die Trommel wird so lange gedreht bis die gelbe Markierung auf der Rückseite nicht mehr zu erkennen ist. Die Anzahl der Umdrehungen ist das Maß für die Wirksamkeit des Staubbinders.

Als Versuchsbriketts wurden handelsübliche Grillbriketts auf Braunkohlenkoksbasis aus Hallschlag verwendet. Die Briketts werden im Trockenschrank auf 110 °C erhitzt. Die Briketts werden heiß im laufenden Mischer mit einer Lackierpistole der Fa. Wagner besprüht. Es wurden jeweils 9 kg Briketts für jeweils 60 Sekunden besprüht. Die Briketts wurden nach dem Besprühen zwecks Abtrocknung bis zum nächsten Tag gelagert. Folgende Staubbinder wurden verwendet und folgende Ergebnisse wurden ermittelt

Versuch 1:
Unbehandeltes Brikett. Ergebnis: 4 Umdrehungen.

Versuch 2:
Sprühmedium: Garo 217 der Fa. Govi (Wachs/ÖI-Basis). Verdünnung: 1 : 1 mit Wasser. Sprühmenge: 147 g (1,6 Gew.-%). Ergebnis: 22 Umdrehungen.

Versuch 3:
Sprühmedium: Aldepol VAV 25 der Fa. Imparat (Polyvinylacetatdispersion). Verdünnung: 1 : 1 mit Wasser. Sprühmenge: 166 g (1,8 Gew.-%). Ergebnis: 18 Umdrehungen.

Versuch 4:
Sprühmedium: Inhidust F2 der Fa. Govi (Ligninbasis). Verdünnung: 1 : 1 mit Wasser. Sprühmenge: 149 g (1,6 Gew.-%). Ergebnis: 9 Umdrehungen.

Versuch 5:
Sprühmedium: Calciumchloridlösung. Konzentration: 40 %-ig. Sprühmenge: 171 g (1,9 Gew.-%). Ergebnis: 25 Umdrehungen.

Das beste Ergebnis zeigt sich bei Versuch 5. Die Wirkung der Calciumchloridlösung beruht auf der hygroskopischen Eigenschaft des Salzes Calciumchlorid. Dieses Salz bindet soviel Wasser an sich, dass die Oberfläche des Briketts immer feucht gehalten wird. Und Wasser ist ein hervorragender Staubbinder. Der Nachteil ist, dass diese Feuchtigkeit extrem zündhemmend ist. Deswegen kann Calciumchlorid z.B. bei einem Grillbrikett nicht angewendet werden. Hervorragende Ergebnisse werden auch mit Garo 217 sowie Aldepol VAV 25 erzielt, mit Einschränkung auch mit Inhidust F2. Diese Mittel sind nicht hygroskopisch und somit besonders für Briketts geeignet, die als Grillbrikett verwendet werden können.

### Bezugszeichen:

- 1: Durchlauf-Sprüheinrichtung
- 2: Grundrahmen
- 3: Sprühtrommel
- 4: Laufrollen
- 5: Elektromotor
- 6: Trommelmantel
- 7: Rollenkette
- 8: Füße
- 9: Bodenplatte
- 10: Einlauf
- 11: Auslauf
- 12: Rand
- 13: Sprühbalken
- 14: Sprühdüsen
- 15: Sprühkegel
- 16: Leitbleche
- 17: Leitbleche
- 18: Siebdurchbrüche
- 19: Auffangwanne
- 20: Kragen
- 21: Stützrolle
- 22: Sicherheitsgitter

## Patentansprüche

1. Verfahren zur Herstellung eines staubarmen Braunkohlenkoksbriketts umfassend folgende Verfahrensschritte:
- Bereitstellen von feinkörnigem bis feinstkörnigem Braunkohlenkoks oder einer Mischung enthaltend solchen Braunkohlenkoks,
- Stückigmachen durch Pressagglomeration in Form von Briketts des feinkörnigen bis feinstkörnigen Braunkohlenkokses oder der Mischung,
- gegebenenfalls Trocknen der Pressformlinge,
- Bereitstellen oder Herstellen eines flüssigen Staubbindemittels oder einer flüssigen Zubereitung enthaltend ein Staubbindemittel,
- Aufbringen der flüssigen Zubereitung auf die Pressformlinge, und
- gegebenenfalls Trocknen der Pressformlinge.

2. Verfahren nach Anspruch 1, **dadurch gekennzeichnet, dass** das flüssige Staubbindemittel oder die flüssige Zubereitung enthaltend das Staubbindemittel ein organisches Bindemittel auf Polymerbasis umfasst.

3. Verfahren nach Anspruch 1 oder 2, wobei das flüssige Staubbindemittel oder die flüssige Zubereitung enthaltend das Staubbindemittel wässrig ist.

4. Verfahren nach einem der vorherigen Ansprüche, wobei das flüssige Staubbindemittel oder die flüssige Zubereitung enthaltend das Staubbindemittel ausgewählt ist aus der Gruppe umfassend Garo 217 (Fa. Govi), Aldepol VAV 25 (Fa. Imparat), und Inhidust F2 (Fa. Govi).

5. Verfahren nach einem der vorherigen Ansprüche, wobei das flüssige Staubbindemittel oder die flüssige Zubereitung enthaltend das Staubbindemittel durch Sprühen auf die Pressformlinge aufgebracht wird.

6. Verfahren nach Anspruch 5, wobei das Aufsprühen auf die Pressformlinge durch individuelles Besprühen jedes einzelnen Pressformlings, durch kontinuierliches Vorbeiführen der Pressformlinge mittels Förderer an einer Sprühvorrichtung, durch chargenweises Besprühen der Pressformlinge in einer Trommel oder durch kontinuierliches Besprühen der Pressformlinge in einer Trommel im Durchlaufverfahren erfolgt.

7. Staubarmes Braunkohlenkoksbrikett umfassend feinkörnigen bis feinstkörnigen Braunkohlenkoks, **dadurch gekennzeichnet, dass** ein Staubbindemittel oder eine Zubereitung enthaltend das Staubbindemittel auf der Oberfläche des Briketts aufgebracht ist.

8. Brikett nach Anspruch 7, wobei das Staubbindemittel oder die Zubereitung enthaltend das Staubbindemittel ein organisches Bindemittel auf Polymerbasis umfasst:

9. Brikett nach Anspruch 7 oder 8, wobei das Staubbindemittel oder die Zubereitung enthaltend das Staubbindemittel ausgewählt ist aus der Gruppe umfassend Garo 217 (Fa. Govi), Aldepol VAV 25 (Fa. Imparat), und Inhidust F2 (Fa. Govi).

10. Verwendung eines flüssigen Staubbindemittels oder einer flüssigen Zubereitung enthaltend ein Staubbindemittel zur Herstellung eines staubarmen Braunkohlenkoksbriketts.

11. Verwendung nach Anspruch 10, wobei das flüssige Staubbindemittel oder die flüssige Zubereitung enthaltend das Staubbindemittel ein organisches Bindemittel auf Polymerbasis umfasst.
